# EUROPEAN PATENT APPLICATION

(11) **EP 4 671 834 A1**
(43) Date of publication of application: **31.12.2025**
(21) Application number: 24185358.9
(22) Date of filing: 28.06.2024
(51) Int. Cl.: G02B 5/08

(54) **MIRROR**

(71) Applicant: High Tech Coatings GmbH, 4663 Laakirchen (AT)
(72) Inventor: Heitzinger, Dominik, 4693 Desselbrunn (AT); Eder, Andreas, 4810 Gmunden (AT); Bauer, Juergen, 4600 Wels (AT); Preinfalk, Klaus, 4491 Niederneukirchen (AT)
(74) Representative: Harringer, Thomas

(57) **Abstract**

The invention relates to a mirror made on a substrate that is not limited by its surface quality. Said mirrors having no or minor imperfections between the surface of its substrate and the polishing layer, also in the case when an adhesive layer is applied between the surface of its substrate and the polishing layer; and said mirrors having improved reflectivity. Additionally, it relates to a method for producing said a mirror wherein the application of the polishable/machinable layer is carried out by an uncomplicated and therefore less costly process.

## Description

### Field of the Invention

The present invention relates to a mirror comprising a reflective layer (2) configured to reflect radiation in a wavelength of more than 25 nm that exhibits improved reflection properties and longer lifetime and to a process for producing said mirror. It also relates to a satellite or drone or flight propelled device or a telescope or a spectrometer or a microscope or a telecommunications device or solar energy system or a lighting system or a medical device or a thermal imaging device comprising said mirror.

### Background

Mirrors with high reflectivity are very useful and of great importance in applications like for example in telecommunications, optical instruments, and laser technology. Some developments have been carried out in the field of EUV lithography. For example US8976927B2 discloses an apparatus comprising a substrate for a mirror configured to reflect extreme ultraviolet (EUV) radiation, the substrate comprising: a main body produced from an aluminum alloy, a polishing layer having a thickness of less than 10 µm and a root-mean-square roughness of less than 0.5 nm; and a reflective layer arranged on the polishing layer of the substrate, the reflecting layer comprising a multilayer structure configured to reflect EUV radiation. According to US8976927B2 the root-mean square roughness of a maximum of approximately 0.5 nm of the polishing layer of the substrate has a positive impact on the reflectivity of the mirror.

However, the possibility to have low root-mean square roughness on the polished layer of a mirror is strongly related to the type of substrate that is used, generally this is possible on very good polishable substrates. This means that having a polished layer with low root-mean square roughness and without defects on other type of substrate, cannot be achieved. This limits, the type of substrates to be used in the production of the mirrors; for example, substrates that are difficult to be mechanically processed or substrates that are less good polishable. The term "less polishable" means that the substrate has a surface with many defects and/or has a surface that is very difficult to be polished to a roughness having low values of root-mean-square roughness (for example of less than 1 nm) without defects and/or when the surface is polished, it takes long polishing time to achieve low values of root-mean-square roughness without defects.

Another drawback of the current mirrors is that normally the polishable/machinable layer (layer to be polished or machined to a polished/machined layer) is thin because it is generally applied on very good polishable substrates. This means that if a substrate that is difficult to be mechanically processed or a substrate that is less polishable is used, the thin polishable layer cannot cover completely the imperfections of the surface of the substrate, creating a uncomplete and non-uniform adhesion of the subsequent layer to be applied on the polishing layer, for example of the reflective layer to be applied on the polishing layer; during the production of the mirror. This creates the formation of some imperfections or holes between the polishing layer and the subsequent layer (for example between the polishing layer and the reflective layer) resulting in areas of the mirror with poor or no reflection, affecting the overall reflective properties of the mirror. This also limits, the type of substrates to be used in the production of the mirrors; for example, substrates that are difficult to be mechanically processed or substrates that are less good polishable. In the production of some mirrors an adhesive layer is applied on the surface of the substrate before the application of the polishable/machinable layer. However, this adhesive layer replicates the condition of the surface of the substrate, also replicating the defects of the surface of the substrate. Therefore, the same drawbacks as mentioned above also apply to mirrors having an adhesive layer applied on the surface of the substrate before the application of the polishable/machinable layer.

Additionally, in the case of concave or convex mirrors, when a thin polishable layer is applied on the substate, it is not possible to achieve a proper centering of the mirror curve to the middle point of the outer diameter of the of the mirror. This is a disadvantage in the production of good quality mirrors.

Generally, the application of the polishable/machinable layer on a substrate is carried out by vacuum coating methods or by using dispersion layers or by chemical vapor deposition. However, some of these methods have limitations with respect to the substrate where the polishable/machinable layer is applied. Additionally, due to the method used for applying the polishable/machinable layer, the polishing/machining of said polishable/machinable layer takes long time to get the required polished/machined layer (polishing/machining layer).

Therefore, there is the need of mirrors that does not have the above-mentioned drawbacks and also of mirrors made on a substrate that is not limited by its surface quality. Said mirrors having no or minor imperfections between the surface of its substrate and the polishing layer, also in the case when an adhesive layer is applied between the surface of its substrate and the polishing layer; and said mirrors having improved reflectivity.

Additionally, there is the need of a method for producing a mirror wherein the application of the polishable/machinable layer is carried out by an uncomplicated and therefore less costly process. Additionally, there is the need that the resulting polishable/machinable layer is suitable to be polished/machined faster and more accurately and without limitation on the type of substrate used in the production of said mirror.

### Summary of the Invention

In order to solve the above-mentioned problems, the present invention provides a mirror comprising a reflective layer (2) configured to reflect radiation in a wavelength of more than 25 nm,
a machined layer (3),
a substrate (4),
wherein the machined layer (3) is arranged between the reflective layer (2) and the substrate (4) and comprises an amorphous silicon material,
wherein the surface of the machined layer (3) has a root-mean-square roughness of below 1 nm as measured by Atomic Force Microscopy (AFM) with a scan-Area of 10x10 µm with 512 x 512 measurement points and calculated according to ISO4287.
and wherein the machined layer (3) is the result of a machinable layer (3') previous to be machined, that was applied to the surface of the substrate (4) by physical vapor deposition without using radio frequency.

Unexpectedly, the mirror according to the invention has a high reflection rate of light waves compared to current mirrors. The mirror according to the invention has no or minor imperfections on the surface of the polished/machined layer and as a result of that the reflectivity of the mirror improves.

Additionally, as the reflection rate is high, fewer light waves are absorbed by the mirror surface and the heating rate of the mirror decreases significantly. Therefore, the use of cooling systems to cool down the mirror to lower temperatures, is decreased. Therefore, the risk that the mirror according to the invention breaks due to overheat is significantly decreased and the lifetime of the mirror significantly increases. This is very advantageous in applications where the risk of generating high temperatures in the mirror is high for example in laser applications.

Additionally, the mirror according to the invention can be made on different types of substrates including less polishable substrates.

In one embodiment of the invention the mirror comprises a reflective layer (2) configured to reflect radiation in a wavelength of more than 25 nm,
a machined layer (3),
a substrate (4),
wherein the machined layer (3) is arranged between the reflective layer (2) and the substrate (4) and comprises an amorphous silicon material,
wherein the surface of the machined layer (3) has a root-mean-square roughness of below 1 nm as measured by Atomic Force Microscopy (AFM) with a scan-Area of 10x10 µm with 512 x 512 measurement points and calculated according to ISO4287.
and wherein the machined layer (3) is the result of a machinable layer (3') previous to be machined, that was applied to the surface of the substrate (4) by physical vapor deposition without using radio frequency.

Generally, the reflective layer (2) comprised in the mirror according to the invention, is configured to reflect radiation in a wavelength of more than 25 nm, preferably in the range to from 100 nm to 10600 nm, more preferably in the range of from 120 nm to 2000 nm.

Generally, the machined layer (3) comprised in the mirror according to the invention, has a root-mean-square roughness of below 1 nm. Preferably the root-mean-square roughness of the machined layer (3) is of from 0.8 nm to 0.5 nm. This is advantageous because it decreases the number of light waves that are absorbed or scattered by the mirror surface resulting in a significant decrease of the heating rate of the mirror. Therefore, the risk that the mirror according to the invention breaks due to overheat is significantly decreased and the lifetime of the mirror significantly increases.

The root-mean-square roughness of the machined layer is measured by Atomic Force Microscopy (AFM) with a scan-Area of 10x10 µm with 512 x 512 measurement points and calculated according to ISO4287.

The machined layer is the result of a machinable layer (3') that has generally been applied to the surface of the substrate (4) in a step during the preparation of the mirror according to the invention.

The machinable layer (3') is generally applied to the surface of the substrate (4) by physical vapor deposition (PVD) method without using radio frequency. After the application of the machinable layer (3') on the surface of the substrate (4), said layer (3') is then machined to create the machined layer (3) having a root-mean-square roughness of below 1 nm. The machinable layer (3') applied by physical vapor deposition method without using radio frequency is advantageous because it can be machined to a machined layer (3) having a root-mean-square roughness of less than 1 nm, which is difficult or not possible to be achieved with machinable layers applied by other coating methods. Additionally, these coating methods has limitations with regards to the type of substrate to be coated. This physical vapor deposition method is also advantageous because the machinable layer (3') applied by this method can be machined to a machined layer (3) faster compared to machinable layers applied by other methods, for example compared to chemical vapor deposition method. The method "physical vapor deposition without using radio frequency" includes methods like for example: direct current magnetron sputtering, pulse sputtering, arc deposition methods. The person skilled in the art understands the physical vapor deposition methods and how they work.

According to the present invention the machinable layer is not limited to be applied only on the surface of the substrate (4). The machinable layer (3') can also be applied on other surface or surfaces which has/have previously been applied on the surface of the substrate (4).

More detailed information about the method for preparing the mirror according to the invention and other embodiments of the method can be found below in the section "method for preparing the mirror according to the invention".

The machined layer (3) comprised in the mirror according to the invention comprises an amorphous silicon material or is made of an amorphous silicon material. The application of the amorphous silicon material on the substrate (4) by physical vapor deposition method without using radio frequency is very advantageous as it allows to machine the machinable layer (3') to a machined layer (3) having a root-mean-square roughness of below 1 nm.

In one embodiment of the present invention, the mirror further comprises an adhesion layer (5) arranged on the surface of the substrate (4) and between the surface of the substrate (4) and the machined layer (3).

The presence of the adhesion layer (5) in the mirror according to the invention is advantageous because it creates a strong bonding between the surface of the substrate (4) and the machinable layer (3'). This strong bonding prevents that the machinable layer (3') breaks during the machining of said layer to a machined layer (3) having a root-mean-square roughness of less than 1 nm.

In another embodiment of the present invention the mirror further comprises a transition layer (5a) arranged between the adhesion layer (5) and the machined layer (3). Generally, the transition layer (5a) comprises a mixture of the compounds comprised in the adhesion layer (5) and in the machined layer (3) as this transition layer (5a) is applied by physical vapor deposition method so that it transitions from the adhesion layer (5) to the machinable layer (3'). The presence of the transition layer (5a) in the mirror according to the invention is advantageous as it improves the adhesive properties of the adhesion layer (5) creating a stronger bonding between the substrate (4) and the machined layer (3).

Generally, the composition of the transition layer (5a) transitions from 0 % of the composition of the machined layer (3) to 100 % of the composition of the machined layer (3) along the thickness of said transition layer (5a). When the transition layer (5a) has transitioned to 100 % of the composition of the machined layer (3) the machined layer (3) starts.

Generally, the adhesion layer (5) comprises at least one material selected from the group consisting of ruthenium, chromium, platinum, iridium, copper, silver, gold, nickel, nickel-phosphorus, tantalum, titanium, zirconium, tungsten, molybdenum, niobium. According to the present invention any combination of the above-mentioned materials is also possible to be comprised in the adhesion layer (5).

In another embodiment of the present invention the adhesion layer (5) has a thickness in the range of from 10 nm to 10000 nm, preferably in the range of from 50 nm to 1000 nm, more preferably in the range of from 50 nm to 100 nm. This is advantageous as it improves the adhesive properties of the adhesion layer (5) creating a stronger bonding between the substrate (4) and the machined layer (3).

Generally, the transition layer (5a) has a thickness in the range of from 10 nm to 5000 nm, preferably in the range of from 50 nm to 1000 nm, more preferably in the range of from 100 nm to 500 nm. This ranges are independent from the thickness of the adhesion layer.

In another embodiment of the present invention the thickness of the machined layer (3) is in the range of from 250 nm to 100000 nm, preferably in the range of from 400 to 75000, more preferably in the range of from 500 to 50000 nm.

In another embodiment of the present invention the thickness of the machinable layer (3') is in the range of from 5000 nm to 200000 nm, preferably in the range of from 20000 nm to 150000 nm, more preferably of from 25000 to 75000 nm. This thickness is advantageous as it allows to machine the machinable layer (3'), to a machined layer (3) with low root-mean-square roughness without defects or imperfections on said layer. Additionally, it increases the use of different types of substrates to be used in the production of the mirrors; for example, the use of substrates that are difficult to be mechanically processed or substrates that are less good polishable as a thicker machinable layer covers the imperfections of the surface of the substrates. This eliminates the formation of imperfections or holes between the machined layer (3) and the subsequent layer resulting a mirror with improved reflection properties.

Additionally, in the case of concave or convex mirrors, a thick machinable layer (3') allows achieving a proper centering of the mirror curve to the middle point of the outer diameter of the of the mirror. Resulting in mirrors with improved quality.

In another embodiment of the present invention the substrate (4) comprises at least one or is made of at least one material selected from the group consisting of metal, polymer-based material, glass, ceramic, metalloid or composite material.

In one specific embodiment, as the substrate (4) can comprise at least one of the above-mentioned materials, the substrate (4) can be made of one of the above-mentioned materials, said material being coated or precoated with at least one of the above-mentioned materials.

Examples of metals are aluminum, aluminum alloy, copper, copper alloy, beryllium, steel, magnesium, magnesium alloy.

Examples of ceramic materials are silicon, silicon carbide, fused silica, reinforced silicon carbide, sapphire.

Example of glass material is ultra-low expansion glass, optical glass, borosilicate glass.

Examples of polymers are engineering polymers, reinforced polymers.

Example of metalloid is germanium.

In another embodiment of the present invention the reflective layer (2) comprises at least one metallic coating and/or at least one dielectric coating.

In a further embodiment of the present invention the reflective layer (2) comprises one metallic coating and more than one dielectric coatings.

Examples of metallic coatings are aluminum, gold, silver, rhodium, copper, platinum, chrome.

Examples of dielectric coatings are oxide materials, fluoride materials, sulfide materials and selenide materials.

Examples of oxide materials are titanium dioxide, hafnium dioxide, tantalum pentoxide, silicon dioxide, yttrium oxide.

Examples of fluoride materials are magnesium fluoride, barium fluoride, Yttrium fluoride.

Examples of sulfide materials and selenide materials are zinc sulfide and zinc selenide.

In another embodiment of the present invention the mirror further comprises at least one protective overcoat layer (6) arranged on the top of the reflective layer (2).

Examples of protective overcoat layer (6) are dielectric coatings like silicon oxide or magnesium fluoride, aluminum oxide, ruthenium. However, other types of protective layers can be used.

The present invention also relates to a substrate (4) having a machinable layer (3') having a thickness in the range of from 5000 nm to 200000 nm, preferably in the range of from 20000 nm to 150000 nm, more preferably of from 25000 to 75000.

Method for preparing the mirror according to the invention.

The present invention also relates to a process for producing a mirror according to the invention, comprising the steps of
a. applying, by physical vapor deposition, a machinable layer (3') on the surface of a substrate (4) or on the surface of an adhesion layer (5), without using radio frequency,
b. applying a reflective layer (2) on a machined layer (3) wherein the machined layer (3) is the result of the machinable layer (3') after being machined.

The process for producing a mirror according to the invention generally comprises a step where a machinable layer (3') is applied on the surface of a substrate (4). The machinable layer (3') is applied by physical vapor deposition method without using radio frequency. The method "physical vapor deposition without using radio frequency" includes methods like for example: direct current magnetron sputtering, pulse sputtering, arc deposition methods. The person skilled in the art understands the physical vapor deposition methods and how they work.

The application of the machinable layer by physical vapor deposition method without using radio frequency is advantageous as it allows the deposition of the machinable layer (3') having a thickness between 5000 nm to 200000 nm. It is also advantageous as the resulting machinable layer (3') can be machined to a machined layer (3) faster than machinable layers deposed by using other deposition methods.

The mirror according to the invention has a high reflection rate of light waves compared to current mirrors. Additionally, as the reflection rate is high, fewer light waves are absorbed by the mirror surface and the heating rate of the mirror decreases significantly

The presence of the machinable layer (3') is very important because it creates the anchor for the reflective layer (2) of the mirror according to the invention.

To create this anchor for the reflective layer, the machinable layer (3') is machined to create a machined layer (3) having a root-mean-square roughness of below 1nm. The root-mean-square roughness of the machined layer is measured by Atomic Force Microscopy (AFM) with a scan-Area of 10x10 µm with 512 x 512 measurement points and calculated according to ISO4287.

Once the machined layer (3) having a root-mean-square roughness of below 1nm has been created, a reflective layer (2) is then applied on said machined layer (3).

The machining of the machinable layer (3') is generally carried out by one of the following methods: diamonds turning, grinding, polishing, milling, chemical mechanical polishing (CMP), ion beam figuring (IBF), magneto rheological finishing (MRF), laser polishing. However, any other method that provides a surface polishing/machining suitable to be used in mirrors is also applicable.

The term machining is not limited to machining but also to polishing. The person skilled in the art can understand the concept of machining and polishing and their differences.

The application of the reflective layer (2) on the machined layer (3) is not limited to physical vapor deposition method as other methods suitable for this purpose can be used.

Examples of method for the application of the reflective layer (2) on the machined layer (3) are thermal evaporation, physical vapor deposition, chemical vapor deposition, atomic layer deposition.

In another embodiment, the method according to the invention further comprises the step of applying an adhesion layer (5) on the surface of the substrate (4) previous to the application of the machinable layer (3'). In this embodiment, once the adhesion layer has been applied to the surface of the substrate (4) the machinable layer (3') is then applied on the adhesion layer (5).

In another embodiment, the method according to the invention comprises the step of applying at least one metallic coating and/or at least one dielectric coating on the reflective layer (2). Generally, these coatings are applied on the reflective layer (2) and are very useful as they provide a protective coating to the mirror according to the invention. When at least one metallic coating and/or at least one dielectric coating is applied on the reflective layer (2), this means that they are applied one on the top of the other at least one metallic coating and/or at least one dielectric coating on the reflective layer (2), creating a multilayer structure on the reflective layer (2).

The present invention also provides a satellite or drone or flight propelled device or a telescope or a spectrometer or a microscope or a telecommunications device or solar energy system or a lighting system or a medical device or a thermal imaging device comprising at least one mirror according to the invention.

The present invention also provides a laser system comprising at least a mirror according to the invention.

Examples of laser systems are a laser cutting device, a laser welding device, a medical laser, a CO₂ laser resonator and a manufacturing laser system.

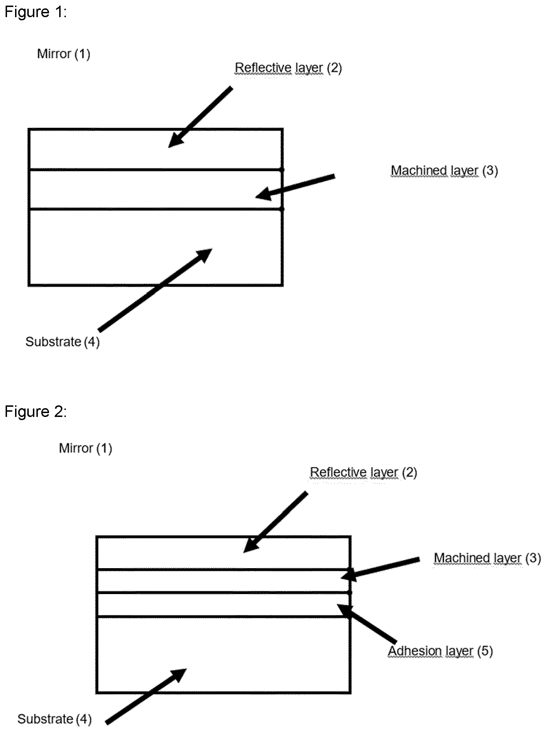

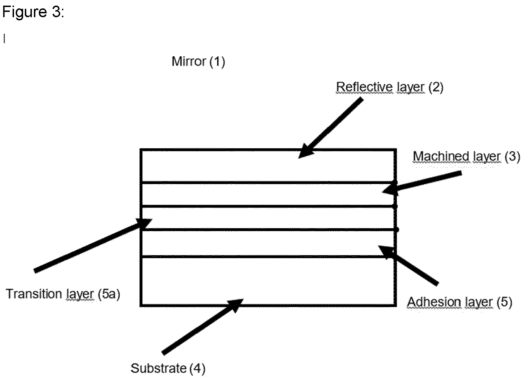

## Claims

1. A mirror comprising a reflective layer (2) configured to reflect radiation in a wavelength of more than 25 nm,
a machined layer (3),
a substrate (4),
wherein the machined layer (3) is arranged between the reflective layer (2) and the substrate (4) and comprises an amorphous silicon material,
wherein the surface of the machined layer (3) has a root-mean-square roughness of below 1 nm as measured by Atomic Force Microscopy (AFM) with a scan-Area of 10x10 µm with 512 x 512 measurement points and calculated according to ISO4287,
and wherein the machined layer (3) is the result of a machinable layer (3') previous to be machined, that was applied to the surface of the substrate (4) by physical vapor deposition without using radio frequency.

2. The mirror according to claim 1, further comprising an adhesion layer (5) arranged on the surface of the substrate (4) and a transition layer (5a) arranged between the adhesion layer (5) and the machined layer (3).

3. The mirror according to claim 2, wherein the composition of the transition layer (5a) transitions from 0 % of the composition of the machined layer (3) to 100 % of the composition of the machined layer (3) along the thickness of said transition layer (5a).

4. The mirror according to any one of claims 2 to 3, wherein the adhesion layer (5) comprises at least one material selected from the group consisting of ruthenium, chromium, platinum, iridium, copper, silver, gold, nickel, nickel-phosphorus, tantalum, titanium, zirconium, tungsten, molybdenum or niobium.

5. The mirror according to anyone of claims 2 to 4, wherein the adhesion layer (5) has a thickness in the range of from 10 nm to 10000 nm.

6. The mirror according to anyone of claims 1 to 5, wherein the thickness of the machinable layer (3') is in the range of from 5000 nm to 200000 nm.

7. The mirror according to anyone of claims 1 to 6, wherein the substrate (4) comprises at last one or is made of at least one material selected from the group consisting of metal, polymer-based material, glass, ceramic, metalloid or composite material.

8. The mirror according to claim 7, wherein the substrate (4) is made of a material according to claim 7, said material being coated or precoated with at least one of the materials according to claim 7.

9. The mirror according to anyone of claims 1 to 7, wherein the substrate (4) is made of magnesium, magnesium alloy or a mixture thereof.

10. The mirror according to anyone of claims 1 to 9, wherein the reflective layer (2) comprises at least one metallic coating and/or at least one dielectric coating.

11. The mirror according to anyone of claims 1 to 10, further comprising at least one protective overcoat layer (6) arranged on the top of the reflective layer (2).

12. A process for producing a mirror according to anyone of claims 1 to 11, comprising the steps of
a. applying, by physical vapor deposition, a machinable layer (3') on the surface of a substrate (4) or on the surface of an adhesion layer (5), without using radio frequency.
b. applying a reflective layer (2) on a machined layer (3) wherein the machined layer (3) is the result of the machinable layer (3') after being machined.

13. The process according to claim 12 comprising the step of applying at least one metallic coating and/or at least one dielectric coating on the reflective layer (2).

14. A satellite or drone or flight propelled device or a telescope or a spectrometer or a microscope or a telecommunications device or solar energy system or a lighting system or a medical device or a thermal imaging device comprising at least one mirror according to anyone of claims 1 to 11.

15. A laser system comprising at least a mirror according to anyone of claims 1 to 11, wherein the laser system is a laser cutting device or a laser welding device or a medical laser, a CO₂ laser resonator or a manufacturing laser system.
